# EUROPEAN PATENT APPLICATION

(11) **EP 3 624 458 A1**
(43) Date of publication of application: **18.03.2020**
(21) Application number: 19196724.9
(22) Date of filing: 11.09.2019
(51) Int. Cl.: H04N 21/234, H04N 21/2343, H04N 21/262, H04N 21/6373

(54) **IMAGE PROCESSING APPARATUS AND METHOD OF CONTROLLING THE SAME**

(30) Priority: 11.09.2018 KR 20180108460
(71) Applicant: Samsung Electronics Co., Ltd., Gyeonggi-do 16677 (KR)
(72) Inventor: LEE, Jae Soon, 16677 Gyeonggi-do (KR); KIM, Young Il, 16677 Gyeonggi-do (KR); KIM, Hyun Tae, 16677 Gyeonggi-do (KR); AHN, Kwang Hoon, 16677 Gyeonggi-do (KR)
(74) Representative: Taor, Simon Edward William

(57) **Abstract**

Provided is an image processing apparatus including: a communicator configured to request, from a server, a version having a first bit rate of a first segment of content, and to receive the version having the first bit rate of the first segment through a network in response to the request; and a controller configured to calculate a network bandwidth of the network that was required for the communicator to receive the version having the first bit rate of the first segment, and to control the communicator to request, from the server, a version having a second bit rate of the first segment on the basis of the calculated network bandwidth.

## Description

### BACKGROUND

### 1. Field

The disclosed embodiment relates to an image processing apparatus for reproducing a media segment using adaptive streaming and a method of controlling the same.

### 2. Description of the Related Art

A streaming service that may be used for a video-on-demand (VOD) service or an audio-on-demand (AOD) service refers to a technology in which a servicing terminal reproduces a file for video or audio received from a server in real time while downloading the file, rather than after the entire file is completely received.

Development of such a streaming service has become active with introduction of wired and wireless broadband communication capable of providing fast transmission speed, such as asymmetric digital subscriber lines (ADSL), very high-data rate digital subscriber lines (VDSL), power line communications (PLC), optical communications, and 2.5G (second and a half generation) to 3G (third generation) mobile communication.

With the development of broadband communication, multimedia contents including video or audio come to have higher resolution and higher quality. In addition, by the nature of the Internet communication line, the transmission speed may vary with a network environment, such as a usage time period in which a number of connected users are concentrated, and the like Due to increasing volume of contents, there is an emerging an HTTP Adaptive Streaming (HAS) service for efficiently processing video traffic.

### SUMMARY

Therefore, it is an object of the present disclosure to provide an image processing apparatus capable of providing a high quality image while improving the user satisfaction by immediately reproducing a segment having a high bit rate according to a network state, and a method of controlling the same.

Additional aspects of the disclosure will be set forth in part in the description which follows and, in part, will be obvious from the description, or may be learned by practice of the disclosure.

In accordance with one aspect of the present disclosure, an image processing apparatus includes: a communicator configured to request image content from outside and receive a plurality of segments included in the image content; a signal processor configured to decode the plurality of segments to convert the plurality of segments to an image signal and a speech signal; and a controller configured to calculate a network bandwidth required for the communicator to receive a first segment having a first bit rate among the plurality of segments, and re-request a first segment having a second bit rate on the basis of the calculated network bandwidth.

The controller may determine set information of the plurality of segments on the basis of metadata received by the communicator.

The controller may request the first segment having the first bit rate from the outside on the basis of uniform resource locator (URL) included in the metadata.

The controller may configure a pipeline required for the signal processor to perform decoding on the basis of codec information included in the first segment having the first bit rate.

The controller may configure the pipeline by determining a plurality of software decoders on the basis of the codec information.

The controller may decode the first segment having the second bit rate through the configured pipeline.

The controller, after receiving the first segment having the second bit rate, may compare codec information of the first segment having the second bit rate with the codec information of the first segment having the first bit rate.

The controller may reproduce the first segment having the second bit rate on the basis of time information at which the first segment having the first bit rate is reproduced.

The controller may request a second segment having the second bit rate while receiving the first segment having the second bit rate.

The controller may determine the second bit rate on the basis of the network bandwidth.

In accordance with another aspect of the present disclosure, a method of controlling an image processing apparatus includes: receiving a first segment having a first bit rate included in content from outside; calculating a network bandwidth required for receiving the first segment having the first bit rate; re-requesting a first segment having a second bit rate on the basis of the calculated network bandwidth; and reproducing the content by decoding the first segment having the second bit rate.

The method may further include: receiving metadata from the outside before the receiving of the first segment having the first bit rate; and determining set information of a plurality of segments on the basis of the metadata.

The receiving of the metadata may include receiving the first segment having the first bit rate from the outside on the basis of uniform resource locator (URL) included in the metadata.

The reproducing of the content may include configuring a pipeline required for the decoding on the basis of codec information included in the first segment having the first bit rate.

The reproducing of the content may include determining a plurality of software decoders on the basis of the codec information.

The reproducing of the content may include, after receiving the first segment having the second bit rate, comparing codec information of the first segment having the second bit rate with the codec information of the first segment having the first bit rate.

The reproducing of the content may include reproducing the first segment having the second bit rate on the basis of time information at which the first segment having the first bit rate is reproduced.

The re-requesting of the first segment having the second bit rate may include requesting a second segment having the second bit rate while receiving the first segment having the second bit rate.

The re-requesting of the first segment having the second bit rate may include determining the second bit rate on the basis of the network bandwidth.

### BRIEF DESCRIPTION OF THE DRAWINGS

These and/or other aspects of the disclosure will become apparent and more readily appreciated from the following description of the embodiments, taken in conjunction with the accompanying drawings of which:
FIG. 1 is a diagram illustrating a system including a server and an image processing apparatus according to the disclosed embodiment.
FIG. 2 is a control block diagram for describing the disclosed adaptive streaming service from the perspective of software.
FIG. 3 is a control block diagram for describing the disclosed image processing apparatus from the perspective of hardware.
FIGS. 4 and 5 are diagrams for describing a control operation of a system including an image processing apparatus according to the disclosed embodiment.
FIGS. 6 and 7 are views for describing a difference from the conventional streaming service.
FIG. 8 is a flowchart showing a method of controlling the disclosed image processing apparatus.
FIG. 9 is a detailed view for describing a difference from the conventional streaming service.

### DETAILED DESCRIPTION

Like numerals refer to like elements throughout the specification. Not all elements of embodiments of the present disclosure will be described, and description of what are commonly known in the art or what overlap each other in the embodiments will be omitted. The terms as used throughout the specification, such as "∼ part", "∼ module", "∼ member", "∼ block", etc., may be implemented in software and/or hardware, and a plurality of "∼ parts", "∼ modules", "∼ members", or "∼ blocks" may be implemented in a single element, or a single "∼ part", "∼ module", "∼ member", or "∼ block" may include a plurality of elements.

It will be further understood that the term "connect" or its derivatives refer both to direct and indirect connection, and the indirect connection includes a connection over a wireless communication network.

It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof, unless the context clearly indicates otherwise.

Although the terms "first," "second," "A," "B," etc. may be used to describe various components, the terms do not limit the corresponding components, but are used only for the purpose of distinguishing one component from another component.

As used herein, the singular forms "a," "an" and "the" are intended to include the plural forms as well, unless the context clearly indicates otherwise.

Reference numerals used for method steps are just used for convenience of explanation, but not to limit an order of the steps. Thus, unless the context clearly dictates otherwise, the written order may be practiced otherwise.

Hereinafter, the principles and embodiments of the disclosure will be described with reference to the accompanying drawings.

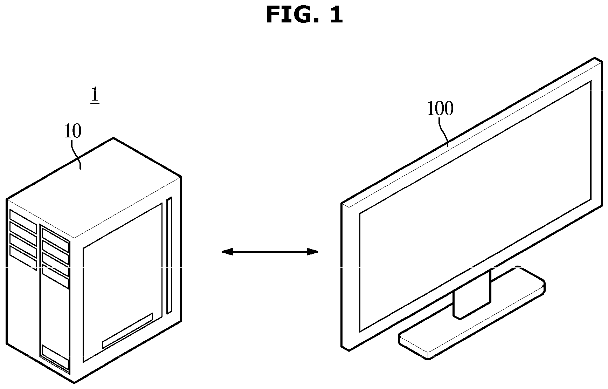

FIG. 1 is a diagram illustrating a system including a server and an image processing apparatus according to the disclosed embodiment.

Referring to FIG. 1, a streaming system 1 according to an embodiment includes an image processing apparatus 100 and a server 10 for providing the image processing apparatus 100 with content.

Although the image processing apparatus 100 is illustrated as a display apparatus that may display an image by tuning content, the image processing apparatus 100 may include a set-top box for outputting a content signal to a separate television (TV), or a mobile display apparatus.

The server 10 may include a streaming server for storing streaming content or a relay server for delivering streaming content.

The image processing apparatus 100 and the server 10 may be connected to each other through a predetermined network, or may be directly connected to each other.

When the image processing apparatus 100 mainly receives a wireless communication service, as in a smart phone, a tablet computer, a smart watch, and the like, the network connecting the server 10 to the image processing apparatus 100 may include a wireless network. On the other hand, when the image processing apparatus 100 mainly uses a wired network, as in a personal computer, the network connecting the server 10 to the image processing apparatus 100 may be composed of a wired network as a whole. However, even when a personal computer is used, a part of the network connecting the server 10 to the image processing apparatus 100 may be composed of a wireless network.

The image processing apparatus 100 may run a streaming application. The streaming application is an application for providing a user with a streaming service, such as a VOD service or an AOD service. For example, the streaming application may include Netflix, Hulu, Amazon Player, and the like.

Content to be streaming-serviced includes at least one of video content, audio content, image content, and text content. The user may run the streaming application through a user interface, and request a specific streaming service. Then, the image processing apparatus 100 may request a plurality of segments constituting the content selected by the user from the server 10 through a proxy module. A method of providing a streaming service will be described below with reference to other drawings.

Meanwhile, the streaming system 1 may include a base station (an evolved Node B:eNB) between the image processing apparatus 100 and the server 10 to relay a method of requesting or receiving a segment. That is, the base station may request a segment corresponding to a bit rate selected by the image processing apparatus 100 from the server 10 on behalf of the image processing apparatus 100, and receive the requested segment and provide the received segment to the image processing apparatus 100.

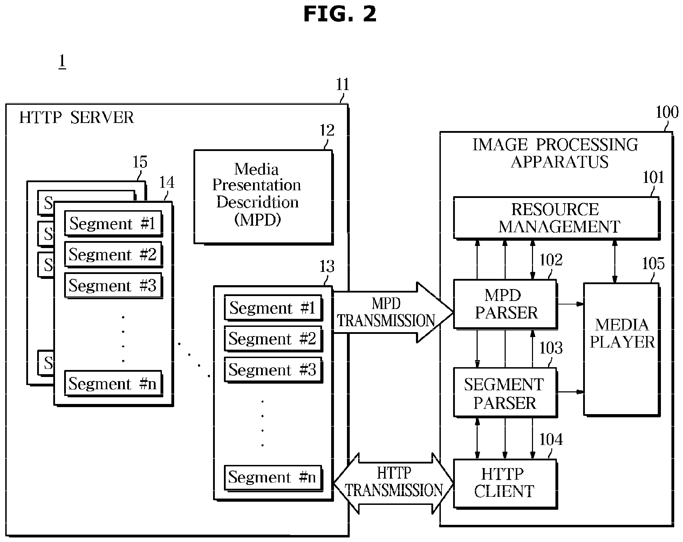

FIG. 2 is a control block diagram for describing the disclosed adaptive streaming service from the perspective of software.

Referring to FIG. 2, the image processing apparatus 100 according to the disclosed embodiment may receive a plurality of segments through HyperText Transfer Protocol Adaptive Streaming (HAS) to reproduce content.

In detail, according to HAS, video content 13 is divided in units of segments or chunks in the HTTP server 11, which is a type of the server 10. In addition, the HTTP server 11 has different versions of segment sets 13 to 15 according to the presentation, for example the resolution. Each segment is assigned a corresponding uniform resource locator (URL).

The image processing apparatus 100 requests segments using the assigned URLs and HTTP, and the HTTP server 11 provides a plurality of segments to the image processing apparatus 100 in the order that the segments are selected.

In detail, the HTTP server 11 has metadata including information about a resolution, a segment length, and a segment URL of an original video, and provides the metadata to the image processing apparatus 100 when the service is started. For example, the HTTP server 11 may have a Media Presentation Description (MPD) 12. The MPD 12 is a type of the metadata described above. In 3GP-DASH, a MPD format is used as a metadata file format.

Meanwhile, the disclosed embodiment may be applied not only to MPEG Dynamic Adaptive Streaming over HTTP (DASH) but also to HTTP Live Streaming (HLS) or Microsoft Smooth Streaming (SS). Accordingly, the HTTP server 11 may provide the image processing apparatus 100 with a master playlist including metadata in the case of HLS. In addition, even in SS, the HTTP server 11 may transmit a manifest file including information about the resolution, segment length (duration), and segment URL of the original video to the image processing apparatus 100.

The image processing apparatus 100 receives the metadata from the HTTP server 11 and parses the metadata through a MPD parser 102. That is, a resource management 101 of the image processing apparatus 100 may identify the number of sets of segments hold by the HTTP server 11, the resolution of each segment, and the like, and select a segment to be requested.

When the selection is completed, the resource management 101 requests the segments through an HTTP client 104 using the URLs corresponding to the selected segments. The HTTP server 11 provides a segment interface in response to the request. The resource management 101 parses the received segment through a segment parser 103 and provides an image to the user through a media player 105.

On the other hand, HAS may dynamically adjust the streaming bit rate according to a change in network throughput or network bandwidth. As described above, the server 10 stores a plurality of segment sets of various bit rates. When the network state is improved while the image processing apparatus 100 is sequentially receiving a plurality of segments, the server 10 may provide the image processing apparatus 100 with a next segment having a higher bit rate. In addition, when the network bandwidth decreases with the increasing number of temporary connectors, the image processing apparatus 100 may request a next segment having a lower bit rate such that the streaming is not interrupted.

However, the conventional streaming service operates in a way such that in order to determine the current network state at the initial stage of the streaming service, a low bit rate segment is received first and then higher bit rate segments are sequentially provided. Accordingly, even when the network bandwidth is large, it takes a few seconds to several minutes to reproduce an image having a high resolution. Such a limitation is improved by the disclosed image processing apparatus 100 through a method described below.

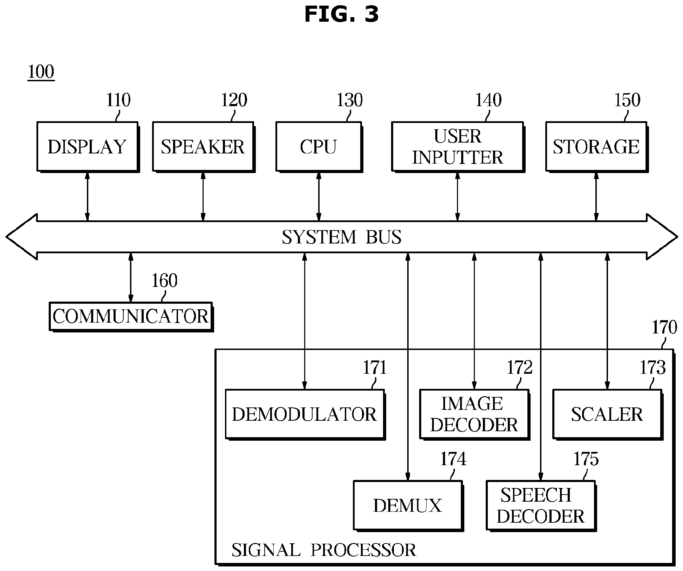

FIG. 3 is a control block diagram for describing the disclosed image processing apparatus from the perspective of hardware.

Referring to FIG. 3, the disclosed image processing apparatus 100 includes a communicator 160 that receives content, a signal processor 170 that processes content received through the communicator 160, a display 110 that displays image data processed by the signal processor 170, a speaker 120 that outputs speech data processed by the signal processor 170, a user inputter 140 that executes an input operation by a user, a storage 150 that stores data, and a central processing unit (CPU) 130 that executes a computation for processing of the signal processor 170 and executes an operation control of the image processing apparatus 100. These components are connected to each other via a system bus.

In the following description, the CPU 130 and the signal processor 170 are illustrated described as separate configurations, but according to an embodiment, the CPU 130 and the signal processor 170 may be implemented as a single system on chip (SOC).

The communicator 160 receives content transmitted by a broadcast method or a broadband method. When the image processing apparatus 100 is implemented as a television (TV), the communicator 160 may tune a content signal at a frequency specified by the CPU 130. To this end, the communicator 160 may include a tuning chip provided for tuning an RF signal.

The communicator 160 including the tuning chip, upon receiving content, tunes the received content at a specific channel frequency such that the content is converted into a transport stream. The communicator 160 generates the transport stream by converting the frequency of a high frequency carrier to an intermediate frequency band to generate a digital signal. To this end, the communicator 160 may have an A/D converter.

In the case of receiving content a broadband method reception, the communicator 160 receives packet data transmitted from the server 10. Such packet data may include metadata and segments described above with reference to FIGS. 1 and 2. The following description will be made in relation to an embodiment in which transmission is performed in the broadband method, but the transmission method is not limited thereto.

In the broadband method, the communicator 160 supports at least one of a wired protocol or a wireless protocol. The communicator 160, when supporting a wired protocol, requires an Ethernet module, and when using a wireless protocol, requires a wireless communication module. The communicator 160 may include both the Ethernet module and the wireless communication module to support wired protocol and a wireless protocol.

The signal processor 170 performs various processes on the content received by the communicator 160. The signal processor 170 extracts image data from the content to perform an image processing process, and outputs the image data subjected to the image processing process to the display 110 such that an image is displayed on the display 110.

A demodulator 171 performs an operation inverse to that of a modulator that modulates a signal. That is, the demodulator 171 converts the content delivered from the communicator 160 into a transport stream. Since the content received by the communicator 160 is a signal modulated by the transmission side, the demodulator 171 demodulates the modulated content into a form of the original content signal to be processed by the signal processor 170. As a result of the demodulation by the demodulator 171, the signal transmitted from the demodulator 171 to a demux 174 may be provided in the form of a transport stream.

The demux 174 (or demultiplexer) performs an operation inverse to that of a multiplexer. Accordingly, the demux 174 connects a single input port to a plurality of output ports to perform a distribution function by outputting a stream input into the input port to a corresponding one of the output ports according to a selection signal. For example, when four output ports is provided for one input port, the demux 174 may select each of the four output ports by combining states of two selection signals each having a state of 0 or 1.

When the demux 174 is used for the image processing apparatus 100, the transport stream transmitted from the demodulator 171 is divided into a plurality of pieces of sub data. The demux 174 extracts metadata from the transport stream, extracts sub data, such as image data and speech data, from the transport stream on the basis of the metadata, and outputs each sub data through a corresponding one of the output ports.

Meanwhile, in the broadcast method, the demodulator 171 and the demux 174 may be implemented in hardware. That is, when segments are delivered in the broadband method as in the above disclosed one example, the image processing apparatus 100 does not need to change the received content into a transport stream. Accordingly, the image processing apparatus 100 may implement the demux 174 in software, divide image data and speech data on the basis of codec information, and selectively the image data and the speech data to various decoders.

An image decoder 172 restores image data, which has been encoded according to a specific format, to the original state of the image data before the encoding by performing an inverse process of the encoding on the image data. When the image data output from the demux 174 is uncompressed image data, which has not been encoded according to a specific format, the image decoder 172 may deliver the image data to a scaler 173 without performing decoding on the image data.

A speech decoder 175, when speech data encoded according a specific format is output from the demux 174, decodes the corresponding speech data and outputs the decoded speech data to the speaker 120.

The scaler 173 scales the decoded uncompressed image data transmitted from the image decoder 172 according to the resolution of the display 110 or a designated resolution, and outputs the scaled image data to the display 110.

The display 110 displays image data processed by the signal processor 170 as an image. The implementation of the display 110 is not limited, and the display 110 may include a display panel having a light receiving structure, such as a liquid crystal panel, or a display panel having a self-emission structure, such as an OLED panel. In addition to the display panel, the display 110 may further include other components according to the implementation of the display panel. For example, in the case of the liquid crystal display, the display 110 includes a liquid crystal display panel (not shown), a backlight unit (not shown) for supplying light to the liquid crystal display panel, and a panel driving substrate (not shown) for driving the liquid crystal display panel.

The speaker 120 outputs a speech signal processed by the signal processor 170 as a speech. The speaker 120 transmits the speech using the principle of changing the air pressure by vibrating air according to the speech signal. The speaker 120 may include a unit speaker provided to correspond to a speech signal of one channel, and may include a plurality of unit speakers to respectively correspond to speech signals of a plurality of channels. The speaker 120 may include various types of speakers, such as a woofer, a mid-range, a tweeter, and the like, according to the frequency band of the output speech, one or more of which are selected to be used for the image processing apparatus 100.

The user inputter 140 transmits various preset control commands or information to the CPU 130 or the signal processor 170 according to a user's manipulation or input. That is, the user inputter 140 transmits various events generated by the user's manipulation according to the user's intention to the CPU 130 or the signal processor 170.

The user inputter 140 may be implemented in various forms according to a method of inputting information. For example, the user inputter 140 may include a user interface environment installed on the image processing apparatus 100, such as a button installed at an outside of the image processing apparatus 100, a touch screen installed on the display 110, a microphone (not shown) through which a user's speech is input, and a camera (not shown) for capturing or detecting an environment of the outside of the image processing apparatus 100. A remote controller (not shown) may also be considered a configuration of the user interface environment. However, since the remote controller (not shown) is separated from a main body of the image processing apparatus 100, the remote controller transmits a control signal to the image processing apparatus 100 through a separate control signal receiver (not shown) provided on the main body of the image processing apparatus 100.

The storage 150 stores various types of data according to the processing and control of the CPU 130 and the signal processor 170. The storage 150 is accessed by the CPU 130 to perform reading, writing, editing, deleting, and updating of data. The storage 150 may be implemented as a nonvolatile memory, such as flash-memory, hard-disc drive, and solid-state drive (SSD) to preserve data regardless of whether the image processing apparatus 100 is supplied with system power.

The CPU 130 is a component that performs central calculations required for operating the components in the signal processor 170, and basically performs a central role in data interpretation and calculation. The CPU 130 internally includes a processor register (not shown) in which instructions to be processed are stored, an arithmetic logic unit (ALU) (not shown) performing comparison, determination and operation, a controller (not shown) internally controlling the CPU 130 for interpretation of instructions and proper execution of instructions, an internal bus (not shown), a cache (not shown), and the like.

The CPU 130 performs a calculation required for operating each component of the signal processor 170. However, according to the design of the signal processor 170, some component of the signal processor 170 may operate without a data operation of the CPU 130 or may operate by a separate microcontroller (not shown).

The CPU 130 may allocate and distribute all the resources of the image processing apparatus 100 to each component according to a desired operation. For example, when the CPU 130 processes a content signal according to a broadcast method, the CPU 130 activates the communicator 160, the demodulator 171, the demux 174, the image decoder 172, the speech decoder 175, and the scaler 173 that are then allowed to perform an operation thereof. On the other hand, when the CPU 130 processes a streaming signal according to a broadband method, the CPU 130 activates the communicator 160, the image decoder 172, the speech decoder 175, the scaler 173, and the like that are then allowed to perform an operation thereof. The CPU 130 may deactivate a component that is not involved in the current operation according to a specific condition.

In addition to the above-described components, the image processing apparatus 100 may further include various components. Hereinafter, operations of the CPU 130 and the signal processor 170 will be described as operations of the controller (not shown) for the sake of convenience of description.

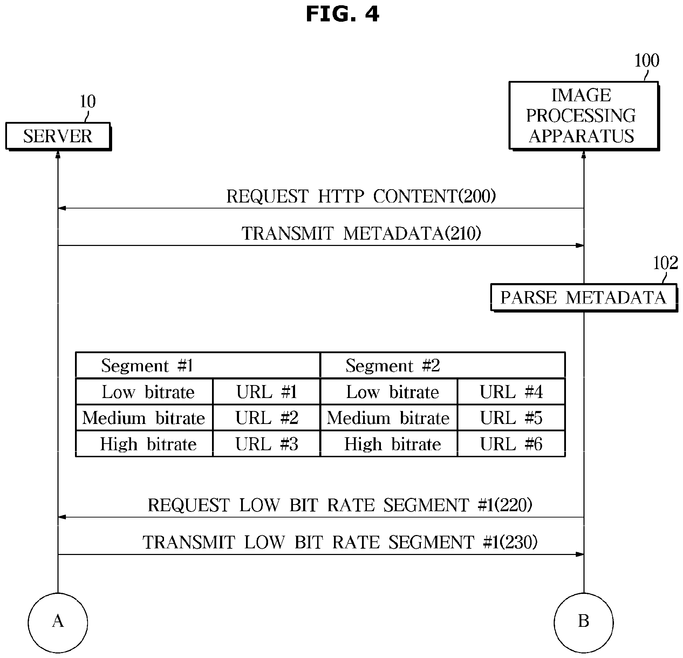

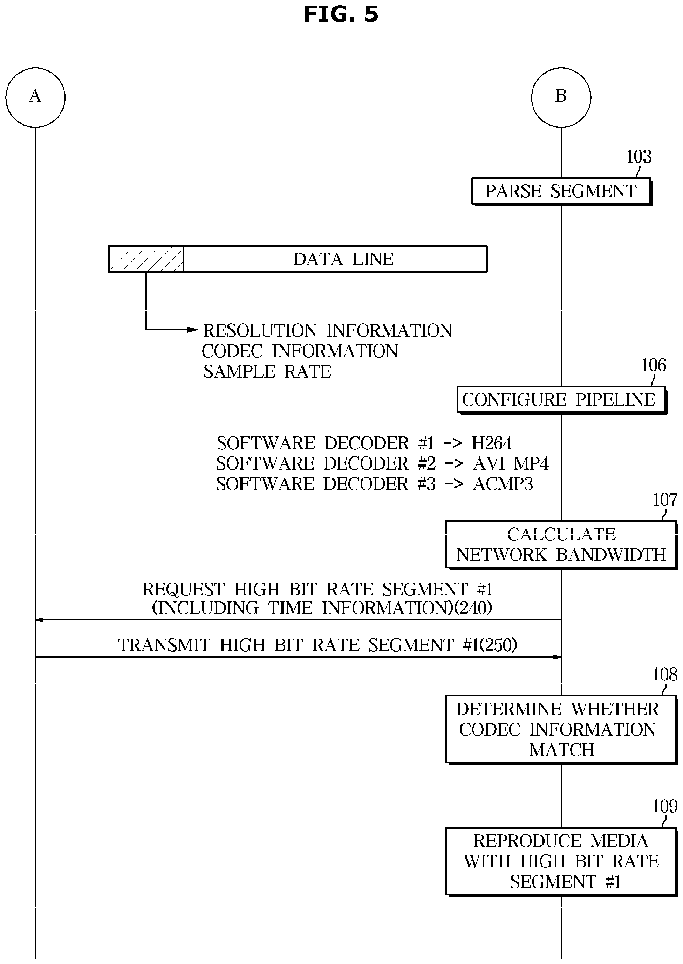

FIGS. 4 and 5 are diagrams for describing a control operation of a system including an image processing apparatus according to the disclosed embodiment.

Referring first to FIG. 4, the image processing apparatus 100 receives a selection regarding streaming content through the user inputter 140. The image processing apparatus 100 requests HTTP content regarding the content for which the selection is received by the user (200).

The server 10 transmits metadata stored in association with the HTTP content to the image processing apparatus 100 (210). As described above, the metadata includes information about the resolution, segment length (duration), and segment URL of the original image.

The image processing apparatus 100 parses the metadata 102 and identifies the number of segment sets according to resolutions held by the server 10 and the number of segments included each segment set.

For example, referring to FIG. 4, the server 10 stores segments according to resolutions. The image processing apparatus 100 may obtain URL information about each segment.

For example, the image processing apparatus 100 may identify that the server 10 stores a first segment having a resolution of 720P, a first segment having a resolution of 1080P, and a first segment having a resolution of 2160P through the metadata. As the resolution increases, the number of bits transmitted per unit time increases. Accordingly, in FIG. 4, the resolutions are identified by bit rates. In addition, the image processing apparatus 100 may identity that the server 10 stores a second segment having a resolution of 720P, a second segment having a resolution of 1080P, and a second segment having a resolution of 2160P.

The disclosed image processing apparatus 100 requests a low bit rate first segment having a resolution of 720P from the server 10 using URL# 1 (220).

The server 10 transmits the requested low bit rate first segment to the image processing apparatus 100 (230).

Referring to FIG. 5, the image processing apparatus 100 parses the received low bit rate first segment (103).

Referring to FIG. 5, a segment may be identified with a data line including image information and an information line including resolution information, codec information, and sample rate of the segment. The image processing apparatus 100 extracts codec information while performing the segment parse.

The image processing apparatus 100 configures a pipeline on the basis of the extracted codec information (106). In detail, the pipeline refers to determining a decoder with which image data and speech data are decoded in a software scheme.

For example, the image processing apparatus 100 may decode a H264 codec associated with image data using a first decoder, decode AVI and MP4 codecs using a second decoder, and decode an AC MP3 codec associated with speech data using a third decoder. When the codec information of the first segment represents H264 and AC MP3, the image processing apparatus 100 may configure a pipeline using the first and third decoders.

Meanwhile, the image processing apparatus 100 may determine the current network situation while receiving the first segment having a low bit rate. In detail, the receiving of the data line of the first segment may take several seconds or several minutes. The image processing apparatus 100 may calculate a bandwidth of the current network using the time taken to receive the data line of the first segment.

When the current network bandwidth is large as in the disclosed embodiment, the image processing apparatus 100 re-requests a first segment having a higher bit rate to suit the calculated network bandwidth from the server 10 (240).

The image processing apparatus 100 may select one of a first segment having an intermediate bit rate corresponding to a resolution of 1080P or a first segment having a high bit rate corresponding to a resolution of 2016P according to the current network bandwidth. For example, the image processing apparatus 100 may re-request a first segment having a bit rate higher than that of the first segment having a resolution of 720P from the server 10.

At this time, since the low bit rate first segment is decoded, the image is being reproduced to some extent. The image processing apparatus 100 may request first segment information having a high bit rate using URL #3 such that time information of the image that is currently being reproduced, for example, a packet switching network (PSN), is included in the request.

The server 10 transmits the high bit rate first segment stored in URL # 3 to the image processing apparatus 100 (250).

The image processing apparatus 100 parses the received high bit rate first segment, and determines whether codec information of the first segment matches the codec information with which the pipeline has been configured (108).

When the codec information of the low bit rate first segment matches the codec information of the received high bit rate first segment, the high bit rate first segment may be decoded through the configured pipeline. That is, while shortening a time that may be additionally taken due to the re-request, the image processing apparatus 100 may reproduce the content of the high bit rate first segment (109).

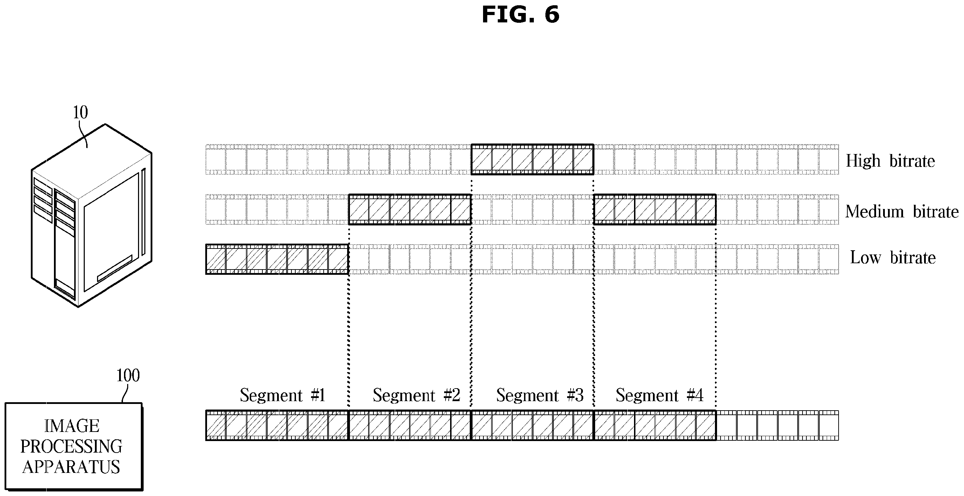

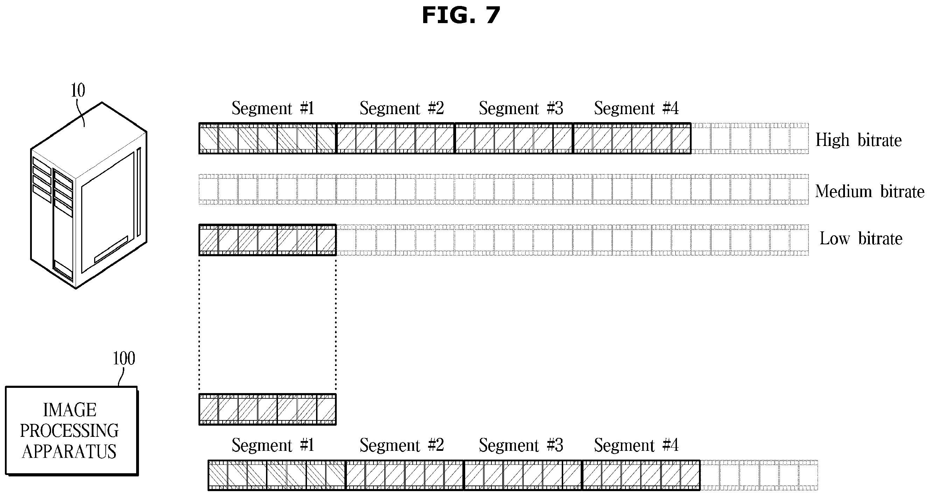

FIGS. 6 and 7 are views for describing a difference from the conventional streaming service.

Referring to FIG. 6, the conventional streaming service allows a first segment having a low bit rate to be received and reproduced even when the network bandwidth is large. Thereafter, according to a network situation that is determined while receiving the first segment, a second segment having an intermediate bit rate is requested and a third segment having a high bit rate is received such that the image is reproduced.

On the other hand, when the network situation worsens during reception of the first to third segments, the conventional image processing apparatus receives a fourth segment having a low bit rate or an intermediate bit rate suitable for the network state such that the image is reproduced.

That is, even in an initial stage having a good network situation, the conventional streaming service receives low bit rate first to third segments in a bundle and reproduces the content, so that users unconditionally watch a low resolution image.

Referring to FIG. 7, the disclosed image processing apparatus 100 re-requests a first segment having a high bit rate when the network situation determined while receiving a first segment having a low bit rate is good. In addition, the disclosed image processing apparatus 100 configures a pipeline using codec information extracted from the low bit rate first segment in advance, so that the resent high bit rate first segment may be immediately reproduced.

With this construction, the image processing apparatus 100 may receive a first segment having a high bit rate and reproduce the content from the beginning of the image, thereby providing the user with a high quality image.

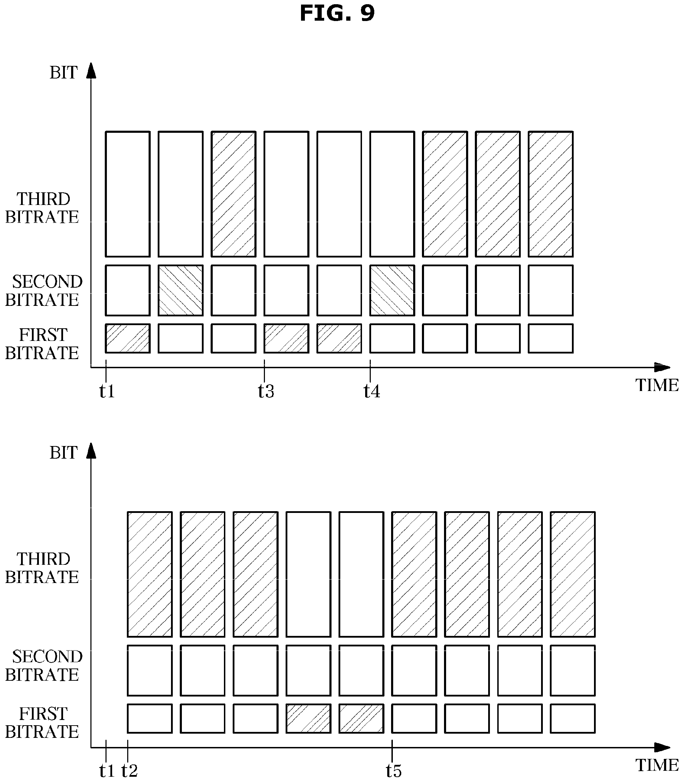

Although not shown in FIG. 7, the disclosed image processing apparatus 100 receives a fifth segment having a low bit rate in a situation where the network bandwidth worsens during reception of the first to fourth segments. However, when the network state improves again, a fifth segment having a high bit rate may be received as in the initial stage, to thereby providing the user with a high resolution image. Details thereof will be described below with reference to FIG. 9 and the like.

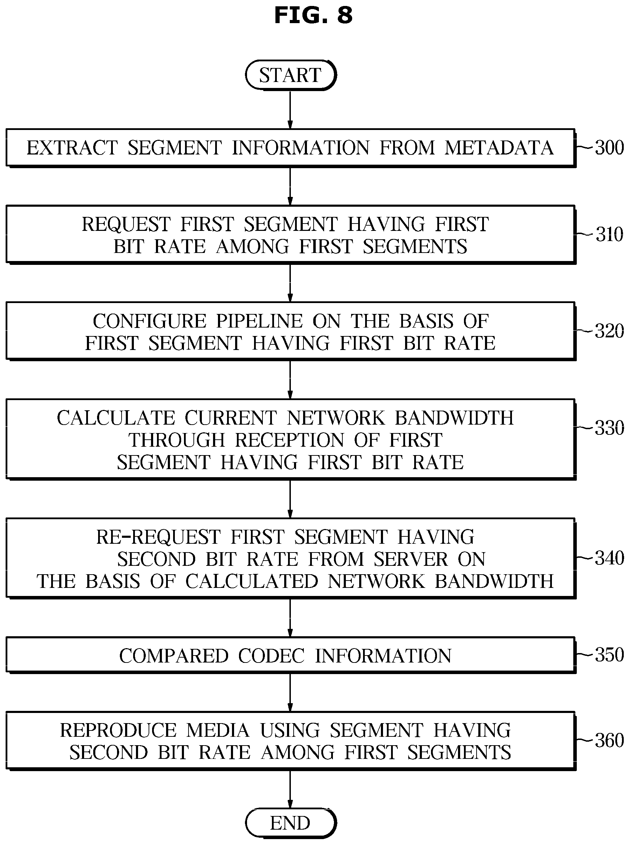

FIG. 8 is a flowchart showing a method of controlling the disclosed image processing apparatus.

Referring to FIG. 8, the image processing apparatus 100 extracts set information of a set of segments from metadata (300).

As described above, metadata or a manifest file includes information about segment sets stored in the server 10. That is, the image processing apparatus 100 extracts the number of segments according to bit rates stored in the server 10 and URLs of the segments on the basis of the metadata.

The image processing apparatus 100 requests a first segment having a first bit rate among first segments included in the server 10 from the server 10 (310).

At this time, since the image processing apparatus 100 does not exactly identify the network situation, the segment having the first bit rate may be a low bit rate first segment.

Upon receiving the segment having the first bit rate, the image processing apparatus 100 configures a pipeline on the basis of codec information included in the segment (320).

In detail, the configuring of the pipeline refers to selecting several decoders for decoding a codec with which the segment has been encoded. The pipeline configured as such is used to decode a high bit rate segments received later.

The image processing apparatus 100 calculates the current network bandwidth through the reception of the segment having the first bit rate (330).

Since metadata, having a very small capacity, is insufficient to calculate the network bandwidth, the image processing apparatus 100 may calculate the bandwidth of the current network while receiving a data line of the segment having the first bit rate.

The image processing apparatus 100 determines a bit rate at which a first segment is to be received on the basis of the calculated network bandwidth. In addition, the image processing apparatus 100 re-requests a first segment having the determined bit rate, that is, the second bit rate from the server 10 (340).

Upon receiving the first segment having the second bit rate, the image processing apparatus 100 determines whether the configured pipeline is available by comparing the codec information (350).

In response to mismatch of codec information, the image processing apparatus 100 may reconfigure the pipeline using the codec information of the first segment having the second bit rate. Generally, segment sets included in a streaming service are encoded with the same codec, and thus the high bit rate first segment may be decoded through the configured pipeline.

The image processing apparatus 100 parses the first segment having the second bit rate among the first segments to reproduce the media (360).

With this configuration, the disclosed image processing apparatus 100 may reproduce an image having a high resolution without significantly delaying a playback start time compared to the conventional streaming service, thereby providing a high quality image while improving user satisfaction.

FIG. 9 is a detailed view for describing a difference from the conventional streaming service.

The first graph of FIG. 9 having a time on the X-axis illustrates the conventional streaming service for sequentially receiving segments for each bit rate. That is, the conventional streaming service receives a first segment having a first bit rate (a low bit rate) at a time t1, and when the network state is good, sequentially receives and reproduces a second segment having a second bit rate and a third segment having a third bit rate.

However, referring to the second graph of FIG. 9, the disclosed image processing apparatus 100 immediately reproduces a first segment having a second bit rate (a bit rate higher than the first bit rate) according to the network situation.

In this case, the disclosed image processing apparatus 100 starts reproducing an image at a time t2 that is later than a playback start time t1 of the conventional streaming service. According to the experiment, the delay time of the disclosed image processing apparatus 100 compared to the conventional technology is only 1.5 seconds at the most. That is, in the disclosed image processing apparatus 100, according to a network situation determined during the reception of a first segment having a first bit rate, a first segment having a high bit rate is received and produced early, so that the user may not recognize a situation in which the playback is slightly delayed. Even when a low resolution first segment image is reproduced, a high resolution first segment image is reproduced according to the time information.

Meanwhile, the conventional general streaming service is configured to, in a state in which low bit rate segments are received due to a poor network situation, when the network situation improves again as shown in the time t4, receive a next segment having a higher bit rate and reproduce an image.

However, the disclosed image processing apparatus 100 immediately requests a higher bit rate segment including time information from the server 10 at a time t5 as in the initial control method, to thereby provide a user with a high resolution image according to the network bandwidth in real time.

As is apparent from the above, the image processing apparatus and the method of controlling the same can provide a high quality image while improving the user satisfaction by immediately reproducing a segment having a high bit rate, and a method of controlling the same.

The image processing apparatus and the method of controlling the same can reproduce a high resolution image without significantly delaying a playback start time compared to the conventional streaming service.

The image processing apparatus and the method of controlling the same can reduce time loss while preventing waste of data by using previously downloaded segment data.

## Claims

1. An image processing apparatus comprising:
a communicator configured to request, from a server, a version having a first bit rate of a first segment of content, and to receive the version having the first bit rate of the first segment through a network in response to the request; and
a controller configured to calculate a network bandwidth of the network that was required for the communicator to receive the version having the first bit rate of the first segment, and to control the communicator to request, from the server, a version having a second bit rate of the first segment on the basis of the calculated network bandwidth.

2. The image processing apparatus of claim 1, wherein the content is divided into a plurality of segments that include the first segment, and the controller is configured to determine information of the plurality of segments on the basis of metadata received by the communicator.

3. The image processing apparatus of claim 2, wherein the controller controls the communicator to request the version having the first bit rate of the first segment on the basis of uniform resource locator (URL) included in the metadata.

4. The image processing apparatus of claim 1, further comprising:
a signal processor configured to decode the version having the first bit rate of the first segment,
wherein the controller is configured to configure a pipeline required for the signal processor to perform decoding on the basis of codec information included in the version having the first bit rate of the first segment.

5. The image processing apparatus of claim 4, wherein the controller is configured to configure the pipeline by determining a plurality of software decoders on the basis of the codec information.

6. The image processing apparatus of claim 4, wherein the signal processor is configured to decode the version having the first bit rate of the first segment through the configured pipeline.

7. The image processing apparatus of claim 4, wherein
the communicator is configured to receive the version having the second bit rate of the first segment, in response to the request for the version having the second bit rate of the first segment, and
the controller is configured to, after the version having the second bit rate of the first segment is received, compare codec information of the version having the second bit rate of the first segment with the codec information included in the version having the first bit rate of the first segment.

8. The image processing apparatus of claim 7, wherein the controller is configured to reproduce the version having the second bit rate of the first segment on the basis of time information at which the version having the first bit rate of the first segment is reproduced.

9. The image processing apparatus of claim 1, wherein the controller is configured to control the communicator to request a version having the second bit rate of a second segment of the content while receiving the version having the second bit rate of the first segment.

10. The image processing apparatus of claim 1, wherein the controller is configured to determine the second bit rate on the basis of the network bandwidth.

11. A method comprising:
by an image processing apparatus,
requesting, from a server, a version having a first bit rate of a first segment of content;
receiving the version having a first bit rate of the first segment through a network in response to the request;
calculating a network bandwidth of the network that was required to receive the version having the first bit rate of the first segment; and
requesting, from the server, a version having a second bit rate of the first segment on the basis of the calculated network bandwidth.

12. The method of claim 11, wherein the content is divided into a plurality of segments that include the first segment, and the method further comprising:
by the image processing apparatus,
receiving, from the server, metadata before the receiving of the version having the first bit rate of the first segment; and
determining information of the plurality of segments on the basis of the metadata.

13. The method of claim 12, wherein the requesting the version having the first bit rate of the first segment requests the version having the first bit rate of the first segment on the basis of uniform resource locator (URL) included in the metadata.

14. The method of claim 11, further comprising:
by the image processing apparatus,
decoding the version having the first bit rate of the first segment; and
configuring a pipeline required for the decoding on the basis of codec information included in the version having the first bit rate of the first segment.

15. The method of claim 14, wherein the configuring the pipeline includes determining a plurality of software decoders on the basis of the codec information.
